# EUROPÄISCHE PATENTSCHRIFT

(11) **EP 0 358 610 B1**
(45) Veröffentlichungstag und Bekanntmachung des Hinweises auf die Patenterteilung: **13.04.1994**
(21) Anmeldenummer: 89810658.8
(22) Anmeldetag: 04.09.1989
(51) Int. Cl.: C09D 11/02, B41M 3/14

(54) **Drucktinte zur Erzeugung abreibbarer Drucke**
Printing ink for making erasable prints
Encre d'impression permettant des impressions effaçables par frottement

(30) Priorität: 05.09.1988 CH 318/88
(43) Veröffentlichungstag der Anmeldung: 14.03.1990
(73) Patentinhaber: SICPA HOLDING S.A., 8750 Glarus (CH)
(72) Erfinder: Amon, Albert, CH-1005 Lausanne (CH); Kiewitz, Dietmar, B-2680 Bornem (BE)
(74) Vertreter: Seehof, Michel

(56) Entgegenhaltungen:
- CA-A- 1 183 734
- GB-A- 1 149 055

## Beschreibung

Die vorliegende Erfindung betrifft eine Offset- oder Buchdruck-Drucktinte zur Erzeugung von deckenden, abreibbaren Drucken nach dem Oberbegriff der Patentanspruches 1.

Es ist bekannt, Druckerzeugnisse mit mechanisch abreibbaren Bereichen herzustellen. Dabei handelt es sich um Druckerzeugnisse, bei denen bestimmte Stellen mit einer deckenden, das heisst undurchsichtigen, aber abreibbaren Schicht versehen sind. Anwendungsbeispiele sind Lotterielose, bei denen der Käufer sofort nach Erwerb durch Abreiben ("Rubbeln") der gekennzeichneten Stellen feststellen kann, ob sein Los gewonnen hat oder nicht.

Allgemein dienen beschädigungsfrei abreibbare Deckschichten auf Sicherheitsdokumenten zum vorübergehenden Unsichtbarmachen von alphanumerischen Informationen wie Nummern, Namen, sonstigen Buchstabengruppen sowie Kombinationen von Zahlen und Buchstaben, aber auch von bildförmigen Informationen. Die Abdeckung muss im auffallenden und im durchscheinenden Licht eine völlige Undurchsichtigkeit ergeben.

Bis heute werden die Abdeckungen der geschilderten Art hergestellt, indem man einen Druckträger ganzflächig, einschliesslich der abzudeckenden Bereiche - im folgenden "Deckstellen" genannt - im Offsetverfahren bedruckt und dann im Siebdruckverfahren auf die Deckstellen zunächst eine transparente, beliebig gefärbte Trennschicht ("Release-Schicht") aufbringt. In einem weiteren Siebdruckschritt wird die pigmenthaltige, einen zerstörbaren Film bildende Deckschicht (d.h. die eigentliche Abreibeschicht) aufgebracht. Die Pigmente sind bevorzugt Teilchen aus Metall, insbesondere aus Aluminium, die farbig eloxiert sein können, damit sich eine perfekte Undurchsichtigkeit ergibt.

In der vorliegenden Patentschrift werden die Ausdrücke "Drucktinte" und "Druckfarbe" als Synonyme gebraucht, wie es in der Technik grossenteils üblich ist.

Siebdrucktinten sind lösemittelhaltige Systeme, die in hohen Schichtdicken aufgetragen werden müssen. Es handelt sich um ein zeitraubendes Auftragsverfahren, wo nach erfolgtem Farbauftrag in sogenannten Wärmetunnel das Lösemittel verdampft und die Farbe getrocknet wird. Das freiwerdende Lösemittel stellt für die meisten Betreiber solcher Anlagen im Zuge der Luftreinhaltungsvorschriften in den einzelnen Länder ein nicht zu unterschätzendes Problem dar.

Die Aufbringung von so hohen Schichtdicken schlägt sich natürlich auch auf die Kosten des Endproduktes sehr deutlich nieder.

Siebdruckeinrichtungen sind in den meisten Offsetdruckereien nicht vorhanden, so dass die im Offset oder Buchdruck bedruckten Erzeugnisse in der Regel in eine andere Fabrik zum Aufbringen der Abrieblacke gebracht werden müssen. Daher war es seit längerer Zeit erwünscht, auch die Abriebschicht im eigenen Hause im Buchdruck oder Offset aufbringen zu können.

Der Verwirklichung dieses Wunsches stand das Vorurteil entgegen, dass man im Offset keine deckenden Schichten erzeugen könne. Diese Ansicht beruhte auf allen bisher bekannten Erfahrungen; immerhin steht fest, dass im Offset nur Schichtdicken von etwa 2-3 um pro Druckgang erhältlich sind, während der Siebdruck solche von 20 um liefert.

Dieses Vorurteil bezog sich, wie nun gefunden wurde, auf bekannte Offsettinten und deren Verbesserungen, wie sie im Bereich des Druckfachmannes liegen.

Aus der CA-A-1 183 734 sind bereits Abriebtinten bekannt geworden, die im sogenannten Lithographiedruck aufgebracht werden können. Als Binderharze enthalten sie jedoch ungesättigte Alkydharze, die zur chemischen Trocknung Schwermetalloctoatinitiatoren benötigen und relativ langsam trocknen. Die Trocknungsgeschwindigkeit ist kaum beeinflussbar.

Aufgabe der Erfindung war es, die Nachteile der bekannten Drucktinten zur Erzeugung abreibbarer Drucke zu beseitigen und schnell trocknende Drucktinten zu schaffen, die im Offset oder Buchdruck aufgebracht werden können.

Die erfindungsgemässe Abreib-Drucktinte erfüllt diese Aufgaben. Sie ist im Patentanspruch l definiert. Bevorzugte Ausführungsformen bilden den Gegenstand abhängiger Ansprüche.

Die erfindungsgemässe, im Buch- oder Offsetdruck aufzubringende Drucktinte, die durch mechanisches Abreiben entfernbar ist, besteht aus zwei Teilsystemen, wie nachstehend näher beschrieben wird. Zum Drucken kann Buchdruck, Trockenoffset oder Nassoffset angewendet werden. Als Unterlagen kommen alle mit diesen Verfahren bedruckbaren Druckträger in Betracht. Die Tinten zeichnen sich durch ein einwandfreies Druckverhalten auf allen bekannten Offsetdruckmaschinen aus. Die erzielbaren Ergebnisse sind hinsichtlich des Deckungs- und Abkratzverhaltens mit der Siebdruckqualität vergleichbar. Die mechanischen Beständigkeiten der abdeckenden Metallfarben sind besser als die der Siebdruckfarben. d.h. die Oberflächenverletzbarkeit der Deckschicht ist gegenüber den bisher eingesetzten Farben deutlich reduziert. Im übrigen ist die Druckgeschwindigkeit bedeutend höher als beim Siebdruck.

Erfindungsgemäss ist die Trenntinte und auch die Decktinte ein hochreaktives System mit chemischer Trocknung, wobei die Trocknung eine durch UV-Strahlen bewirkte, d.h. photoinitiierte, Photopolymerisation darstellt (Chemische Photopolymerisation).

Unter Photopolymerisation versteht man einen Vorgang, bei dem aus niedrigmolekularen, polymerisierbaren Bestandteilen der fliessfàhigen Bindemittel durch Übertragung der Energie der UV-Strahlen, in der Regel mittels eines Photoinitiators, Grossmoleküle entstehen, die einen festen Film bilden.

Ueberraschend war die Feststellung, dass schon sehr dünne Trennschichten für den erforderlichen Zweck, nämlich den Grad der Abstossung der Deckschicht, ausreichen. Ohne sich auf eine die Erfindung einschränkende Erklärung festlegen zu wollen, bestehen Anzeichen dafür, dass die in der Trenntinte enthaltenen Trennsubstanzen bei der Polymerisation der Bindemittel auf die Oberflächen wandern bzw. dorthin verschoben werden, da sie mit den Polymerisaten nicht mehr verträglich sind. Daher wird der Trenneffekt stark gesteigert.

Man verwendet als polymerisierbares System in der Trenntinte und auch in der Decktinte bevorzugt Acrylat-Prepolymere und gegebenenfalls mehrfunktionelle Acrylatmonomere. Diese Bindemittel polymerisieren rasch unter dem Einfluss von UV-Licht und werden dort verwendet, wo die Offset-Druckmaschine mit einem Ultraviolett-Trockner ausgestattet ist.

Der Einsatz dieses Systems erfolgt auf Format- und Rotationsdruckmaschinen. Der Vorteil dieses Systems liegt in der sofortigen Trocknung der beteiligten Komponenten und der damit verbundenen direkten Weiterverarbeitungsmöglichkeiten.

Die Decktinte wird bevorzugt erst kurz vor ihrer Verarbeitung durch Mischen eines speziellen Firnisses mit einer Metallpigmentpaste nach vorgegebenen Mischungsverhältnissen hergestellt.

Das folgende Beispiel soll die Erfindung näher erläutern. Die Mengenangaben im Beispiel beziehen sich auf das Gewicht der fertigen Tinten, wenn nichts anderes angegeben bzw. ersichtlich ist.

### Beispiel

UV-trocknende Drucktinte

### A. Trenntinte

| | |
|---|---|
| - Prepolymer auf Basis von Epoxy-, Urethan-, Polyester- oder Styrol-Butadien-Acrylat, allein oder in Kombination (Prepolymer I): | 20 bis 50% |
| - Mehrfunktionelle Acrylatmonomere: | 20 bis 40% |
| - Polysiloxan-acrylate: | 10 bis 30% |
| - Benzophenon: | 4 bis 6% |
| - Amin-Coinitiatoren: | 6 bis 15% |
| - Acetophenonderivate oder Benzilketale: | 4 bis 6% |
| - Fluorierte organische Salze: | 1 bis 3% |
| - Paraffin und Teflon-Wachse | 5 bis 10% |

### B. Decktinte

| Komponente 1: Firnis | |
|---|---|
| - Prepolymer I: | 80 bis 90% |
| - Mehrfunktionelle Acrylatmonomere: | 0 bis 10% |
| - Acetophenonderivate oder Benzilketale: | 4 bis 6% |
| - Amin-Coinitiatoren: | 4 bis 6% |

| Komponente 2: Metallpaste | |
|---|---|
| - Aluminiumbronze (Gold- oder Silberbronze) | 60 bis 70% |
| - Lösungs- und Benetzungsmittel: | 40 bis 30% |

Zur Trocknung dieses Systems benötigt man UV-Trocknungsanlagen, wie sie zur Zeit im Offset- und Buchdruckbereich generell eingesetzt werden. Die Trocknung erfolgt über Zwischen- oder/und Endtrocknung und läuft schneller ab als die "wärmeinduzierte" chemische Trocknung.

Im allgemeinen können beide Tinten im Trockenoffsetverfahren und im Buchdruck appliziert werden, wobei dickere Farbschichten im Buchdruck mittels Nyloprint-Clichés erzielt werden.

Zunächst wird die Trenntinte aufgedruckt. Je nach Untergrund sind zur vollständigen Abdeckung eine oder zwei Applikationen notwendig. Der Auftrag kann über zwei Druckwerke nass-in-nass oder nass-auf-trocken erfolgen, wobei mit UV zwischengetrocknet wird. Eine ausreichende Trenntintenschicht ist am Glanz und Füllgrad des Druckes erkennbar und ist Voraussetzung für den späteren guten Abkratz- bzw. Abreibeeffekt der derauf gedruckten Metalltinte.

Beim Durchgang des Trenndruckes durch den UV-Trockner wird die spontane Trocknung (Polymerisation) der Schicht bewirkt. Diese kann dann mit der Decktinte bedruckt werden.

Zur Herstellung der gebrauchsfertigen Decktinte vermischt man intensiv den Firnis mit der Metallpaste im Gewichtsverhältnis 5:5 bis 8:2, bevorzugt 6:4 bis 7:3, je nach dem gewünschten Deckungsgrad. Um die Untergrundfarbe, auf der sich der (transparente) Trenndruck befindet und die möglichst dem Ton der Metalltinte entsprechen sollte, gut abzudecken, sollte der Farbauftrag über zwei Druckwerke nass-in-nass oder nass-auf-trocken mit UV-Zwischentrocknung erfolgen.

Durch die Zwischentrocknung wird eine stärkere Deckschicht und eine wesentlich bessere Durchtrocknung gewährleistet.

Die erfindungsgemässen Drucktinten können im Rahmen des Beanspruchten und seiner Aequivalente modifiziert werden. Beispielsweise kann man Pigmente in die Tinten einarbeiten. Art und Menge der Komponenten können geändert werden. Wichtig ist lediglich, dass die Tinten chemisch trocknen müssen. Das zu bedruckende Substrat kann ein anderes als Papier sein, z.B. eine Kunststofffolie.

## Patentansprüche

1. Drucktintenzusammensetzung zur Erzeugung deckender, abreibbarer Drucke mittels Buchdruck oder Offsetdruck auf flexiblen Substraten, bestehend aus einer Trenntinte zur Herstellung eines Trenndruckes und einer ein Metallpigment als Deckmittel enthaltenden, einen dekkenden, abreibbaren Druck erzeugenden Drucktinte, wobei Trenn- und Drucktinte mindestens eine ungesättigte, chemisch härtbare Substanz als Bindemittel enthalten, dadurch gekennzeichnet, dass die Trenntinte und die Decktinte Bindemittel enthalten, die unter dem Einfluss von Ultraviolettlicht polymerisieren, und dass die Trenntinte ein oleophobes Polymer oder Wachs als Trennmittel enthält.

2. Drucktintenzusammensetzung nach Anspruch 1, dadurch gekennzeichnet, dass als Bindemittel in der Trenntinte und der Decktinte Acrylatprepolymere und gegebenenfalls mehrfunktionelle Acrylatmonomere vorliegen.

3. Drucktintenzusammensetzung nach Anspruch 2, dadurch gekennzeichnet, dass das Acrylat-Prepolymer ein Epoxy-, Urethan-, Polyester- oder Styrol-Butadien-Acrylat oder ein Gemisch solcher Acrylate ist.

4. Drucktintenzusammensetzung nach einem der vorstehenden Ansprüche, dadurch gekennzeichnet, dass die Trenntinte und die Decktinte zusätzlich ein Amin als Coinitiator der Polymerisation enthält.

5. Drucktintenzusammensetzung nach einem der vorstehenden Ansprüche, dadurch gekennzeichnet, dass die Decktinte ein Zweikomponentensystem ist, das vor Gebrauch vermischt wird, wobei die eine Komponente aus dem polymerisierbaren Bindemittel mit gegebenenfalls Beschleuniger und Additiven und die andere Komponente aus einer Metallpigmentpaste besteht.

6. Drucktintenzusammensetzung nach Anspruch 1, dadurch gekennzeichnet, dass die Trenntinte als Trennmittel mindestens ein Polysiloxan-acrylat enthält.

7. Drucktintenzusammensetzung nach einem der vorstehenden Ansprüche, dadurch gekennzeichnet, dass die Trenntinte wie folgt zusammengesetzt ist, wobei sich die Prozent-angaben auf das Gewicht beziehen:
| | |
|---|---|
| - Acrylat-Prepolymer: | 20 bis 50 % |
| - Mehrfunktionelle Acrylatmonomere | 20 bis 40 % |
| - Polysiloxan-acrylate | 10 bis 30 % |
| - Benzophenon | 4 bis 6 % |
| - Amin-Coinitiatoren: | 6 bis 15 % |
| - Acetophenonderivate, Benzilketale | 4 bis 6 % |
| - Fluorierte organische Salze | 1 bis 3 % |
| - Paraffin und Teflon-Wachse | 5 bis 10 %. |

8. Drucktintenzusammensetzung nach Anspruch 5, dadurch gekennzeichnet, dass die Decktinte wie folgt nach Gewichtsprozenten zusammengesetzt ist:
| Komponente 1, Firnis: | |
|---|---|
| - Prepolymer nach Anspruch 7: | 80 bis 90 % |
| - Mehrfunktionelle Acrylatmonomere: | 0 bis 10 % |
| - Acetophenonderivate, Benzilketale | 4 bis 6 % |
| - Amin-Coinitiatoren | 4 bis 6 % |
| Komponente 2, Metallpaste: | |
|---|---|
| - Aluminiumbronze | 60 bis 70 % |
| - Lösungs- und Benetzungsmittel | 40 bis 30 %, |
wobei die Komponenten in Mengenverhältnissen (1) zu (2) wie 5:5 bis 8:2, bevorzugt 6:4 bis 7:3, kurz vor Gebrauch vermischt werden.

## Claims

1. Composition of printing inks for the production of opaque rub-off overprints on flexible substrates by the processes of typography or offset, comprising a release ink for producing a release printing, and a covering printing ink containing a metal pigment as an opacifying agent and producing an opaque rub-off printing, said release and printing inks each containing at least one insaturated, chemically hardenibg substance as a binder, characterized in that the release ink and the covering ink contain binders which polymerise under the influence of ultraviolet light, and that the release ink contains an oleophobic polymer or wax as a release agent.

2. Composition of printing inks according to claim 1, characterized in that the release ink and the covering ink contain acrylate prepolymers and optionally polyfunctional acrylate monomers as binders.

3. Composition of printing inks according to claim 2, characterized in that the acrylate prepolymer is an epoxy acrylate, a urethane acrylate, a polyester acrylate or a styrene butadiene acrylate or a mixture of such acrylates.

4. Composition of printing inks according to any one of the preceding claims, characterized in that the release ink and the covering ink additionally contain an amine as a polymerization coinitiator.

5. Composition of printing inks according to any one of the preceding claims, characterized in that the covering ink is a two-component system being blended before use, one component comprising the polymerizable binder optionally containing accelerators and additives, and the other component comprising a metal paste.

6. Composition of printing inks according to claim 1, characterized in that the release ink contains at least one polysiloxane acrylate as a release agent.

7. Composition of printing inks according to any one of the preceding claims, characterized in that the release ink has the following composition, the percentages referring to the weight:
| | |
|---|---|
| - acrylate prepolymer | 20 to 50 % |
| - polyfunctional acrylate monomers | 20 to 40 % |
| - polysiloxane acrylates | 10 to 30 % |
| - benzophenone | 4 to 6 % |
| - amine coinitiators | 6 to 15 % |
| - acetophenon derivatives, benzil ketals | 4 to 6 % |
| - fluorinated organic salts | 1 to 3 % |
| - paraffine and teflon waxes | 5 to 10 %. |

8. Composition of printing inks according to claim 5, characterized in that the covering ink has the following composition in weight percent:
| Component 1, varnish: | |
|---|---|
| - prepolymer of claim 7 | 80 to 90 % |
| - polyfunctional acrylate monomers | 0 to 10 % |
| - acetophenone derivatives, benzil ketals | 4 to 6 % |
| - amine coinitiators | 4 to 6 %; |
| Component 2, metal paste: | |
|---|---|
| - aluminium bronze | 60 to 70 % |
| - solvent and wetting agent | 40 to 30 %, |
said components being blended shortly before use in proportions of (1) to (2) of 5:5 to 8:2, preferably of 6:4 to 7:3.

## Revendications

1. Composition d'encres d'imprimerie pour la production d'impressions opaques, pouvant être enlevées par frottage, sur des substrats flexibles au moyen de typographie ou d'offset, consistant en une encre de séparation pour produire une impression de séparation et une encre d'impression contenant un pigment métallique comme opacifiant pour produire une impression opaque et frottable, les encres de séparation et d'impression contenant au moins une substance insaturée et chimiquement durcissable comme liant, caractérisée en ce que l'encre de séparation et l'encre de couverture contiennent des liants aptes à polymériser sous l'influence de la lumière ultraviolette, et que l'encre de séparation contient un polymère ou une cire oléophobes comme agent séparateur.

2. Composition d'encre d'imprimerie selon la revendication 1, caractérisée en ce que l'encre de séparation et l'encre de couverture contiennent comme liant des prépolymères d'acrylate et éventuellement des acrylates monomères polyfonctionnels.

3. Composition d'encre d'imprimerie selon la revendication 2, caractérisée en ce que le polymère d'acrylate est un acrylate d'époxy, d'uréthane, de polyester ou de styrène-butadiène ou un mélange de tels acrylates.

4. Composition d'encre d'imprimerie selon l'une quelconque des revendications précédentes, caractérisée en ce que l'encre de séparation et l'encre de couverture contiennent en plus une amine à titre de coïnitiateur de polymérisation.

5. Composition d'encre d'imprimerie selon l'une quelconque des revendications précédentes, caractérisée en ce que l'encre de couverture est un système à deux composants qui sont mélangés avant l'usage, l'un des composants comprenant le liant polymérisable contenant éventuellement des accélérateurs et des additifs, l'autre composant comprenant une pâte de pigment métallique.

6. Composition d'encre d'imprimerie selon la revendication 1, caractérisée en ce que l'encre de séparation contient un acrylate de polysiloxane comme agent séparateur.

7. Composition d'encre d'imprimerie selon l'une quelconque des revendications précédentes, caractérisée en ce que l'encre de séparation a la composition suivante, les pourcentages se rapportant au poids:
| | |
|---|---|
| - prépolymère d'acrylate | 20 à 50 % |
| - acrylates monomères polyfonctionnels | 20 à 40 % |
| - acrylates de polysiloxane | 10 à 30 % |
| - benzophénone | 4 à 6 % |
| - coïnitiateurs aminés | 6 à 15 % |
| - dérivés d'acétophénone, benzil kétales | 4 à 6 % |
| - sels organiques fluorés | 1 à 3 % |
| - paraffine et cires téflon | 5 à 10 %. |

8. Composition d'encre d'imprimerie selon la revendication 5, caractérisée en ce que l'encre de couverture présente la composition suivante selon les pourcentages en poids:
| Composant 1: vernis: | |
|---|---|
| - prépolymère selon la revendication 7 | 80 à 90 % |
| - acrylates monomères polyfonctionnels | 0 à 10 % |
| - dérivés d'acétophénone, benzil kétales | 4 à 6 % |
| - coïnitiateurs aminés | 4 à 6 % |
| Composant 2, pâte métallique: | |
|---|---|
| - bronze d'aluminium | 60 à 70 % |
| - solvants et agents mouillants | 40 à 30 %, |
les composants étant mélangés juste avant l'utilisation dans un rapport de (1) à (2) compris entre 5:5 et 8:2, de préférence de 6:4 à 7:3.
